# EUROPÄISCHE PATENTSCHRIFT

(11) **EP 0 637 040 B1**
(45) Veröffentlichungstag und Bekanntmachung des Hinweises auf die Patenterteilung: **21.01.1998**
(21) Anmeldenummer: 93250293.3
(22) Anmeldetag: 29.10.1993
(51) Int. Cl.: H01G 2/14

(54) **Elektrischer Kondensator mit Sicherung**
Electric capacitor with fuse
Condensateur électrique contenant un fusible

(30) Priorität: 02.07.1993 DE 9310066 U
(43) Veröffentlichungstag der Anmeldung: 01.02.1995
(73) Patentinhaber: ELECTRONICON KONDENSATOREN GmbH, D-07548 Gera (DE)
(72) Erfinder: Räck, Lutz, D-07549 Gera (DE); Starke, Roger, D-7546 Gera (DE)
(74) Vertreter: Steinruck, Wolfgang

(56) Entgegenhaltungen:
- EP-A- 0 356 348
- FR-A- 2 335 925

## Beschreibung

### Stand der Technik:

Einschlägige internationale Normen fordern ein gefahrloses Abschalten von elektrischen Kondensatoren vom Netz am Ende der Lebensdauer oder bei Defekten und Überlastungen. Das wird im allgemeinen durch Schutzsysteme in den Kondensatoren erreicht.

Die bekannten Schutzsysteme arbeiten nach dem Prinzip der Stromunterbrechnung durch Schmelzsicherung, Abreißsicherung im Zusammenhang mit Dehnungselementen, Temperatursicherung durch Abschmelzen eines Thermometalls oder durch Temperaturschalter.

(Beispiele: EP-A-0356 348; DE G 9109 642.1; EP 530115; EP 420161; EP 378720; EP 274786)

Jedes dieser Schutzsysteme besitzt bestimmte Eigenschaften, die sich negativ auf die Zuverlässigkeit des Abschaltens des Kondensators im Störfall oder am Ende seiner Lebensdauer auswirken.

Abreißsicherungen sind in ihrer Ausführung sehr aufwendig und empfindlich gegenüber Toleranzen in der Mechanik. Sie erfordern Präzision in der Herstellung und das zuverlässige Verhalten am Ende der Kondensatorlebensdauer wird von Alterungsprozessen der eingesetzten Materialien mit beeinflußt. Der Kostenaufwand ist für die Herstellung von Sicherungen dieser Art entsprechend hoch.

Den nächstliegenden Stand der Technik verkörpert ein Schutzsystem - Stromsicherung in Verbindung mit Abreißsicherung mittels Gasüberdruck -, dargestellt in EP-A-0356 348. Hier ist jedoch das auslösende Element ein sich bildender Gasüberdruck, der den Sicherungsdraht durch eine ausgeübte Zugkraft im Schadensfall zerreißt, kombiniert mit einem Schmelzdraht, der bei unzulässig hohem Strom getrennt wird.

Eine Stromsicherung bietet keinen sicheren Schutz gegen thermische Überlastung, die von außen auf den Kondensator einwirkt oder im Kondensator selbst entsteht.

Die bisher bekannten Kondensatoren mit Temeratursicherungen besitzen den Nachteil der elektrischen Rückzündung, da das Thermometall unkontrolliert abschmilzt, Lichtbogen zieht und die Zuverlässigkeit der Strompfadtrennung lageabhängig ist. Der Erfindung lag die Aufgabe zugrunde, ein hochzuverlässiges Sicherheitssystem für den Betrieb von elektrischen Kondensatoren zu finden, welches die oben genannten Nachteile nicht besitzt. Das Abschalten des Kondensators im kritischen Fall soll zuverlässig, ohne die Möglichkeit einer Rückzündung und unabhängig von der Lage des Kondensators erfolgen. Die Funktionssicherheit der Abschaltung soll bis an das Ende der Lebensdauer des Kondensators gewährleistet sein. Der Kondensator soll technologisch einfach herstellbar und seine Herstellungskosten wirtschaftlich vertretbar sein.

Die Aufgabe wurde dadurch gelöst, daß durch den Einsatz einer speziellen, neuartigen thermischen Überlastsicherung bei der sich das eigentliche Sicherungselement in einem hermetisch abgeschlossenen Grundkörper befindet und bei genau definierter und eng tolerierter Ansprechtemperatur aufschmilzt, das Thermometall lageunabhängig zur Kugelform an den Enden der stromführenden Drähte erstarrt und diese kugelförmigen Enden mit Hilfe einer sich in dem Grundkörper befindlichen chemischen Substanz zusätzlich elektrisch isolierend umschlossen werden. Das Kondensatorelement wird dadurch im Gefahrenfall völlig rückzündungsfrei und lageunabhängig vom Netz getrennt. Die Ansprechtemperatur der thermischen Überlastsicherung wird so gewählt, daß sie der Temperatur an der Kondensatorenoberfläche gleich ist, bei der der Kondensator aus Sicherheitsgründen abschalten sollte.

Diese Lösung bietet folgende Vorteile:

Erwärmt sich der Kondensator über seine maximal zulässige Betriebstemperatur, wird bei Erreichung der Ansprechtemperatur der thermischen Überlastsicherung der Strompfad durch den Kondensator unabhängig von seiner Lage sicher, rückzündungsfrei und irreversibel unterbrochen.

Da keine beweglichen Kontaktteile vorhanden sind, entfallen Unsicherheiten mechanischer Abschaltsysteme sowie Erhöhungen der Kontaktübergangswiderstände durch Alterung.

Die Erfindung wird im folgenden an Hand eines Ausführungsbeispiels dargestellt.

Ein Kondensatorwickel (3) aus metallisierter Polypropylenfolie wird nach allgemein bekanntem Verfahren hergestellt und zur Herstellung der elektrischen Kontakte stirnseitig shoopiert.

Der kurze Zuführungsdraht (2) wird mit einem Ende direkt an der oberen Stirnseite des Wickels elektrisch leitend befestigt und das andere Ende mit dem äußerem Anschlußelement, welches sich im Deckel aus Kunststoff befindet, verbunden.

In dem langen Zuführungsdraht (2) ist die spezielle thermische Überlastsicherung integriert. Das eine Ende dieses Zuführungsdrahtes wird durch den Wickelkern nach unten geführt und an der unteren Stirnseite des Wickels elektrisch leitend befestigt, das andere Ende wird mit dem äußeren Anschlußelement elektrisch leitend verbunden. Die thermische Überlastsicherung ist damit in Reihe mit dem Kondensatorelement geschaltet und so in den Anschlußdraht integriert, daß sie sich nach Ausführen des beschriebenen Einbaus in der Mitte des Wickelkerns in seiner Längsrichtung und damit an einer Stelle befindet, wo sich die Temperaturentwicklung im Kondensatorwickel unmittelbar am stärksten auswirkt.

Der Einbau, bestehend aus Kondensatorwickel, dem kurzen Anschlußdraht, dem langen Anschlußdraht mit integrierter thermischer Überlastsicherung und dem Kunststoffdeckel, wird in ein Kunststoffbecher eingeführt, wobei die Becherlänge so gewählt ist, daß der Deckel den Becher durch Einrasten bündig abschließt.

Die eingebaute thermische Überlastsicherung ist so gewählt, daß die Bemessungsschalttemperatur um 30 °C höher ist als die festgelegte obere Grenztemperatur des Kondensators.

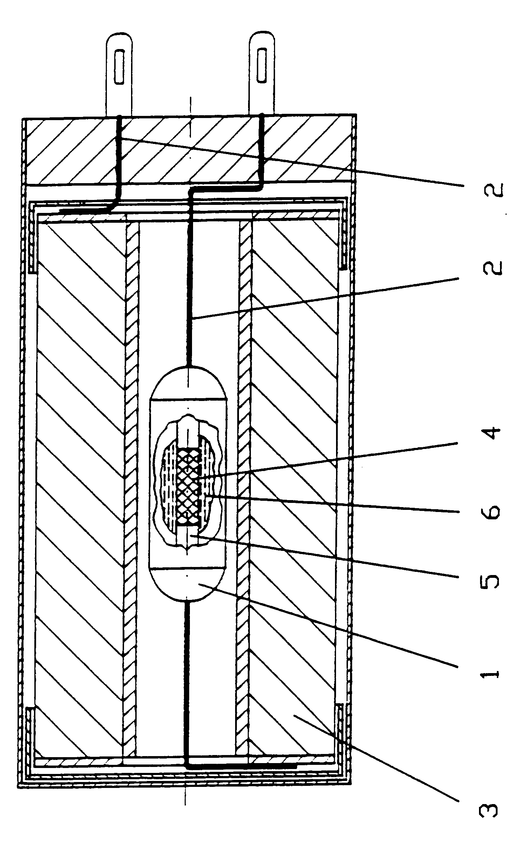

## Patentansprüche

1. Elektrischer Kondensator mit Flamm- und Berstsicherung, die in eine der beiden Zuführungen (2) zum Kondensatorwickel (3) zwischengeschaltet ist, und bei der ein Thermometall (4) schmilzt, zur Kugelform an den Enden der stromführenden Drähte (5) erstarrt, und die Enden mit Hilfe einer chemischen Verbindung (6) isolierend umschlessen werden, was den Strompfad irreversibel trennt, so daß eine rückzündungsfreie und lageunabhängige Stromunterbrechung bei thermischer Überlastung des Kondensators gewährleistet ist, dadurch gekennzeichnet, daß die Sicherung eine hermetisch verschlossene thermische Überlastsicherung (1), ist, deren Ansprechtemperatur so gewählt ist, daß sie der Temperatur an der Kondensatoroberfläche entspricht, bei der der Kondensator aus Sicherheitsgründen abzuschalten ist.

2. Elektrischer Kondensator mit Flamm- und Berstsicherung nach Anspruch 1, gekennzeichnet durch den Einbau der thermischen Überlastsicherung an einer Stelle im Kondensatorgehäuse, wo sich die Temperaturentwicklung im Kondensatorwickel unmittelbar auswirkt und damit die Zeitverzögerung zwischen dem Gefahrenvorgang und dem Abschalten des Kondensators durch das Sicherungselement reduziert wird.

## Claims

1. Electrical capacitor provided with a flameproofing and burstproofing fuse unit which is interconnected in one of two lead-in wires (2) to the capacitor winding (3) in which fuse a low melting metal (4) after melting is solidifyed to a spheroidal form at the ends of the current-carrying wires (5) and these ends are insulated by a chemical composition (6) in a manner which is irreversibly breaking the current path so that in the case of a thermal overload of the capacitor a current interruption without arcing back is secured in any position of the capacitor, characterised in that said fuse is a hermetically sealed thermal overload protection fuse (1) and the response temperature thereof is chosen in such a manner that it corresonds to the temperature on the capacitor surface at which the capacitor is to switch off for safety reasons.

2. Electrical capacitor provided with a flameproofing and burstproofing fuse according to claim 1, characterised in that the thermal overload protection fuse is mounted at such a site within the capacitor housing where the temperature rise is acting immediately whereby the time lag between the occurrence of a damage risk and the switching-off of the capacitor is reduced.

## Revendications

1. Condensateur électrique avec un fusible contre inflammation et contre éclatement qui est intercalé dans l'un des conducteurs (2) à la bobine de condensateur (3) et qu'est fabriqué d'un métal fusible (4) fusant en la cas de la réaction et solidifiant en forme d'une sphère qui enrobe les bouts des fils de connexion (5) isolant lesquelles par une composition chimique (6), coupant irreversiblement le trajet de courant et assurant ainsi en cas d'une surcharge thermique du condensateur une coupure sans retour d'arc en tous les orientations du condensateur, caractérisé en ce que le fusible est un fusible de surcharge thermique (1) fermé hermétiquement dont la température de réponse est tellement choisie qu'elle correspond à la température de surface du condensateur à laquelle il est de couper pour raisons de la sécurité.

2. Condensateur électrique avec un fusible contre inflammation et contre éclatement selon revendication 1, caractérisé en ce que la temporisation entre l'apparition de l'état dangereux et la coupure du condensateur est minimiseè par l'incorporation du fusible de surcharge à une position dans le boîtier de condensateur, où la montée de la température dans la bobine de condensateur se produit immédiatement.
